# FASCICULE DE BREVET EUROPEEN

(11) **EP 3 948 829 B1**
(45) Date de publication et mention de la délivrance du brevet: **01.10.2025**
(21) Numéro de dépôt: 20713651.6
(22) Date de dépôt: 27.03.2020
(51) Int. Cl.: G09F 3/00, G06K 1/12, G06K 7/10, G06K 19/10

(54) **PROCÉDÉ DE MARQUAGE DISSIMULE D'UN SUPPORT ASSOCIÉ A UN PRODUIT**
VERFAHREN ZUR VERDECKTEN MARKIERUNG EINES MIT EINEM PRODUKT VERBUNDENEN TRÄGERS
METHOD FOR THE CONCEALED MARKING OF A SUPPORT ASSOCIATED WITH A PRODUCT

(30) Priorité: 02.04.2019 FR 1903508
(43) Date de publication de la demande: 09.02.2022
(73) Titulaire: Kookaburra, 45800 Saint-Jean-de-Braye (FR)
(72) Inventeur: SAUNIER, Fabrice, 92300 Levallois-Perret (FR); DUVAUX, Marc, 34830 Clapiers (FR)
(74) Mandataire: Marconnet, Sébastien
(86) Numéro de dépôt international: PCT/EP2020/058731
(87) Numéro de publication internationale: WO 2020/201098

(56) Documents cités:
- FR-A1- 2 755 902
- FR-A1- 2 817 356
- US-A- 5 401 960
- US-B2- 8 796 584

## Description

L'invention porte sur un procédé de marquage dissimulé d'un support associé à un produit. L'invention trouve une application particulièrement avantageuse, mais non exclusive, avec les emballages de produits à forte valeur ajoutée, tels que les parfums et les produits cosmétiques. L'invention vise à cacher une identification unitaire pour assurer la traçabilité d'un produit.

Il existe plusieurs méthodes pour dissimuler une identification d'un produit. Ainsi, suivant une technique dite de "Watermaking" en anglais, de l'encre invisible est projetée sur le graphisme d'un emballage de produit de façon à former un code caché. Toutefois, du fait de la technologie d'impression, une telle solution impose de réaliser le marquage des produits par lot et ne permet donc pas d'individualiser le marquage de chaque produit.

D'autres procédés enseignent l'élaboration d'un code à partir d'une signature propre de la matière liée à une distribution locale de fibres ou de matières (par exemple des dorures) pour un emballage de produit donné. Toutefois, un tel principe ne permet pas de garantir de manière certaine l'unicité du marquage, dans la mesure où plus le nombre de produits mis sur le marché augmente, plus la probabilité que deux emballages présentent une même distribution locale ou très proche, de fibres et donc une même signature augmente. De plus, la relation entre l'identification unitaire et cette distribution unitaire relève d'une interprétation mathématique qui reste peu accessible à un audit apportant la preuve de l'interprétation.

L'invention vise à remédier efficacement à ces inconvénients en proposant un procédé de marquage dissimulé d'un support associé à un produit, caractérisé en ce qu'il comporte:
- une étape de génération d'un code unique destiné à être associé au produit, et
- une étape de marquage d'un code invisible à l'œil nu correspondant au code unique sur une zone prédéterminée du support,
   caractérisé en ce que
- le marquage du code invisible consiste en une attaque de matière du support destinée à fragiliser certaines portions de la zone prédéterminée du support formant le code invisible sans affecter un aspect du support,
- de sorte que les portions fragilisées du support lors de l'étape de marquage du code invisible seront les premières portions du support à être altérées pour révéler le code invisible lors d'une étape de lecture ultérieure effectuée par une seconde attaque de matière du support.

Selon une mise en œuvre, l'étape de marquage du code invisible consiste en une attaque mécanique et/ou chimique et/ou optique par un laser et/ou électrique de certaines portions du support.

Selon une mise en œuvre, le support est un emballage ou une étiquette du produit.

Selon une mise en œuvre, le support est un emballage primaire ou un emballage secondaire du produit.

Selon une mise en œuvre, le code invisible est un code en une dimension ou en deux dimensions.

Selon une mise en œuvre, le code invisible est choisi parmi: un ou plusieurs caractères alphanumériques, un code à barres, un code matriciel, un QR code, ou tout autre code numérique développé.

Selon l'invention, l'étape de marquage consiste en une attaque optique par un laser ayant une longueur d'onde comprise dans le domaine des infra-rouges.

Selon une mise en œuvre, le marquage invisible est effectué sur un support comportant des fibres de papier et/ou de plastique.

Selon une mise en œuvre, plusieurs codes invisibles sont marqués au cours d'une même opération sur des zones définies à cet effet.

Selon une mise en œuvre, ledit procédé comporte en outre une étape de marquage d'un code visible auquel est associé le code invisible.

Selon une mise en œuvre, le code invisible est déterminé à partir d'une lecture du code visible qui pourra être le code unique.

Selon une mise en œuvre, la lecture du code visible et le marquage du code invisible correspondant sont synchronisés l'un par rapport à l'autre.

Selon une mise en œuvre, la synchronisation entre la lecture du code visible et le marquage du code invisible est effectuée par rapport à un déplacement du support.

Selon une mise en œuvre, le marquage du code visible peut être réalisé en amont du marquage du code invisible de telle façon que ces deux opérations soient asynchrones l'une par rapport à l'autre.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'un système de marquage dissimulé d'un support d'un produit selon la présente invention;
[Fig. 2] La figure 2 est un diagramme des différentes étapes du procédé de marquage d'un support selon l'invention;
[Fig. 3a] La figure 3a est une photo prise à fort grossissement d'une zone portant un code invisible avant lecture par attaque chimique;
[Fig. 3b] La figure 3b est une photo prise à fort grossissement de la zone portant le code invisible qui a été révélé par attaque chimique.

Les éléments identiques, similaires ou analogues conservent la même référence d'une figure à l'autre.

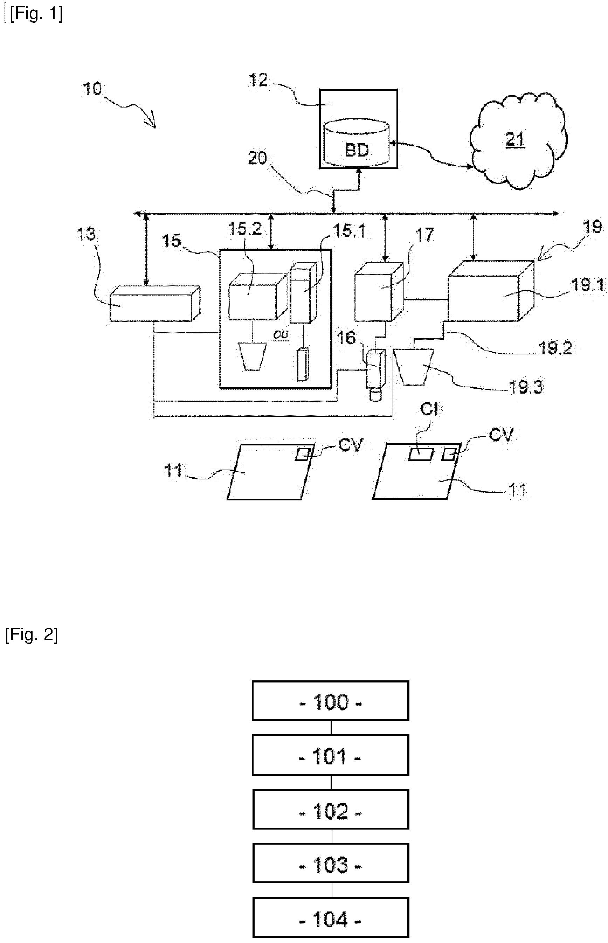

La figure 1 montre un système de marquage 10 d'un support 11, tel qu'un emballage ou une étiquette d'un produit. Ce système 10 vise à associer un code unique au produit afin de pouvoir assurer la traçabilité depuis l'opération de conditionnement jusqu'au point de vente. Ce système 10 permet également d'identifier le produit pour en vérifier son authenticité.

Le support 11 à marquer est un carton, un papier décoré ou non, pelliculé ou non, vernis ou non, et/ou un plastique. Dans le cas d'un emballage, il pourra s'agir d'un emballage primaire, c'est-à-dire un emballage contenant directement le produit ou un emballage secondaire du produit, c'est-à-dire un emballage contenant l'emballage primaire. Par exemple, pour un produit liquide de type parfum, l'emballage primaire est constitué par le flacon contenant le parfum, tandis que l'emballage secondaire est constitué par l'emballage décoré contenant le flacon. En variante, le marquage est effectué sur une étiquette du produit.

Le système de marquage 10 comporte un serveur 12, un automate de commande 13, un dispositif de marquage visible 15, un lecteur optique 16 associé à une unité de commande 17, et un dispositif de marquage invisible 19. Les différents composants décrits plus en détails ci-après sont connectés sur un réseau informatique local 20, notamment de type Ethernet, qui pourra être relié au réseau Internet 21.

Plus précisément, le serveur 12 contient une base de données BD qui enregistre l'ensemble des informations relatives aux produits et aux codes correspondants. La base de données BD permet de générer les codes et d'associer un code invisible CI à un code visible CV pour un support 11 donné et donc un produit donné. Le serveur 12 permet d'éviter tout doublon dans l'élaboration des codes en s'assurant qu'un code donné est bien unique pour un produit donné. Le serveur 12 pourra ainsi signaler tout dysfonctionnement du dispositif de marquage visible 15 qui engendrerait, du fait d'un blocage de sa tête d'impression par exemple, le marquage d'un même code sur deux supports de produit 11 différents.

Le serveur 12, qui est accessible via Internet, pourra également permettre de gérer à distance la maintenance des systèmes de données et leurs sauvegardes. Le serveur 12 pourra également autoriser un accès client pour l'obtention d'informations relatives à la production des produits.

L'automate de commande 13 a pour rôle principal d'assurer une synchronisation entre les différents composants du système. En particulier, l'automate de commande 13 assure la synchronisation entre la lecture d'un code visible CV et le marquage d'un code invisible CI correspondant. La synchronisation n'est pas effectuée par rapport au temps mais par rapport au déplacement du produit sur la ligne de production. Cela permet de s'assurer que le marquage du support 11 se produira à un endroit prédéterminé sur la ligne de production malgré les variations éventuelles de la vitesse de déplacement des supports sur la ligne de production.

L'automate de commande 13 pourra également intégrer une interface homme-machine permettant à l'opérateur d'automatiser les réglages de la ligne de marquage notamment en fonction de la dimension du support 11. Cette interface pourra comporter un module de sélection de format de codage et un module de communication avec les périphériques du système (serveur, dispositifs de marquage, lecteur, et liaisons clients).

Le dispositif de marquage visible 15 permet d'apposer un code visible CV dans une zone prédéterminée du support 11. Le marquage visible peut être réalisé par différentes technologies de marquage, notamment au moyen d'un dispositif à jet d'encre 15.1, un laser 15.2, ou un dispositif magnétique, ou tout autre dispositif adapté à l'application. Le code visible CV pourra être un code en une dimension (1D), ou en deux dimensions (2D), ou un code numérique. Le code visible CV est choisi notamment parmi: un ou plusieurs caractères alphanumériques, un code à barres, un code matriciel, un QR code, ou tout autre code numérique développé. Suivant une réalisation, on dépose sur le support 11 un aplat noir sur fond blanc. Certaines portions de l'aplat pourront être retirées au laser, de façon à créer une alternance de portions noires et de portions blanches représentant le code. Le code est contrôlé au moyen du lecteur optique 16. Le code visible CV est associé à un code invisible CI. Ce code invisible CI pourra être le même code que le code visible CV ou un code différent.

A cet effet, le dispositif de marquage invisible 19 permet d'apposer le code invisible CI dans une zone prédéfinie. Par code "invisible", on entend un code invisible à l'œil nu. Ce code n'est pas non plus visible lorsqu'il est observé à fort grossissement au microscope électronique, à savoir un grossissement de 0.4 nanomètre carré. Ce code n'est pas non plus visible au spectromètre de masse, dans la mesure où le marquage de ce code ne nécessite aucun ajout de matière supplémentaire pour sa réalisation.

Le marquage du code invisible CI consiste en une attaque de matière du support 11 destinée à fragiliser certaines portions de la zone prédéterminée du support 11 formant le code invisible CI sans affecter un aspect du support 11. L'attaque de matière est une attaque de type optique par un laser.

Avantageusement, le marquage invisible est effectué au moyen d'un laser opérant à une longueur d'onde comprise dans le domaine des infrarouges entre 700 nm et 1300 nm, et de préférence comprise entre 1000 et 1200 nanomètres, notamment de l'ordre de 1064 nanomètres. Par "de l'ordre de", on entend une variation possible de plus ou moins 5% par rapport à cette valeur. Le laser est avantageusement un laser de type YAG fibré, mais pourrait être un autre type de laser adapté à l'application.

Par exemple, sur un papier cellulose, l'énergie générée par le laser permet de passer d'une partie cristalline dans laquelle le nombre de liaisons hydrogène est maximal à une partie amorphe qui est favorable à l'altération. Sur les graphismes des matériels (encre, verni, dorure, polymère, ...), cette énergie permet de détruire des liaisons moléculaires (terrain favorable à l'altération) créées préalablement par un procédé d'imprimerie, généralement à chaud, de réticulation (phénomène physico-chimique qui crée des liaisons entre les chaînes macromoléculaires en augmentant la résistance du produit).

Le laser comporte une source 19.1 disposée dans un boîtier déporté. Cette source 19.1 est reliée par des fibres optiques 19.2 à une tête 19.3 comportant une pluralité de miroirs pilotés pour dévier le faisceau laser généré par la source 19.1 afin de réaliser le marquage souhaité dans la zone prédéterminée. Cette zone prédéterminée est constituée par exemple par une surface de 80mm x 80mm.

Comme le code visible CV, le code invisible CI pourra être un code en une dimension (1D), ou en deux dimensions (2D), ou un code numérique. Le code invisible CI est choisi notamment parmi: un ou plusieurs caractères alphanumériques, un code à barres, un code matriciel, un QR code, ou tout autre code numérique développé. Le code visible CV pourra être le même code que le code invisible CI ou un code de type différent.

Plusieurs marquages de codes invisibles CI pourront être effectués au cours d'une même opération sur des zones définies à cet effet.

On décrit ci-après, en référence avec la figure 2, une mise en œuvre du procédé selon l'invention.

Dans une première étape 100, le serveur 12 génère un code unique à apposer sur un support 11 d'un produit.

Dans une étape 101, l'automate de commande 13 pilote le marquage d'un code visible CV qui correspond (à l'identique ou non) au code unique sur une première zone prédéterminée du support 11.

Dans une étape 102, le marquage visible est lu par le lecteur optique 16 pour déterminer le code invisible CI à apposer sur le support 11. Le code invisible CI pourra être le même code que le code visible CV ou un code différent. Le serveur 12 établit la correspondance entre le produit, le code visible CV, et le code invisible CI.

Dans le cas où, suite à une lecture du code visible CV, le serveur 12 mettrait en évidence une duplication d'un code déjà utilisé dû à un dysfonctionnement du dispositif de marquage 15, l'automate de commande 13 ou l'unité de commande 17 du lecteur optique 16 pourra afficher un message d'erreur relatif au codage du support 11. Cette opération conduit à la destruction des supports 11 et/ou des produits déterminés en doublon de numérotation.

Dans le cas où la lecture du code visible CV confirme que le code est bien un code unique, le code invisible CI est apposé par le dispositif de marquage 19 dans une deuxième zone prédéterminée, au cours d'une étape 103. La première zone prédéterminée et la deuxième zone prédéterminée de marquage sont de préférence des zones distinctes du support 11. Cette étape de marquage consiste en une attaque de matière du support 11, notamment par laser infrarouge, destinée à fragiliser certaines portions 23 de la zone prédéterminée du support 11 formant le code invisible CI sans affecter un aspect du support 11.

Dans une étape 104, on cherche à lire le code invisible CI pour déterminer l'authenticité d'un produit. A cet effet, on réalise une autre attaque de matière au moins dans la zone du support portant le code invisible CI, de sorte que les portions fragilisées 23 du support 11 lors de l'étape de marquage invisible seront les premières portions du support 11 à être altérées pour révéler le code invisible CI. L'attaque de matière est de type chimique en étant effectuée au moyen d'un solvant chimique utilisé pour réaliser le graphisme du support 11.

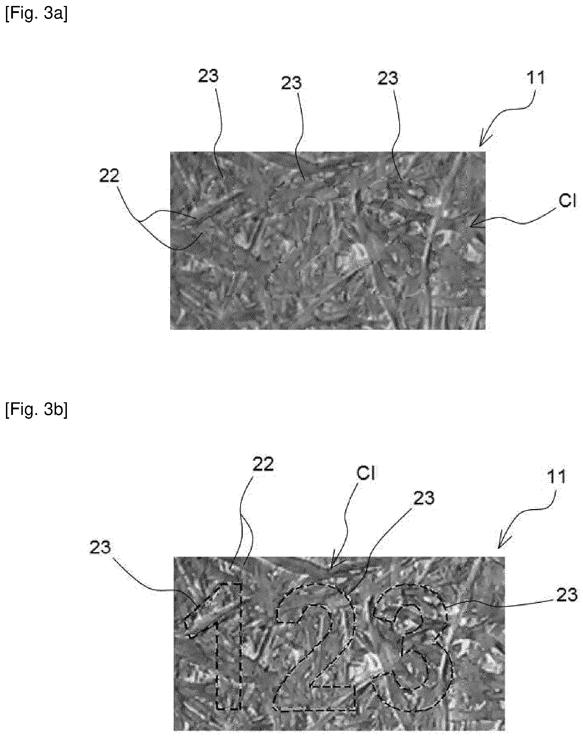

Comme on peut le voir sur la figure 3a, la surface du support 11 présente à fort grossissement une répartition aléatoire de fibres 22 de papier et/ou de plastique. Le marquage invisible utilise cette organisation spatiale aléatoire pour pratiquer, via l'attaque de matière précitée, une suite de déformations des fibres 22 de manière organisée constituant le code invisible CI. Les déformations des fibres 22 sont assimilables à des ruptures de la matière. L'attaque chimique réalisée en lecture permet de mettre en évidence ces ruptures. Le bruit (nature aléatoire de la matière) est avantageusement nettoyé pour laisser apparaître uniquement le codage des points organisés, tel que cela est illustré par la figure 3b.

Dans l'exemple représenté, le code invisible CI est un code alphanumérique afin de faciliter la compréhension de l'invention mais ce code pourrait bien entendu être d'un autre type comme indiqué précédemment. Le choix du type de code dépend de l'application envisagée.

Le marquage du code visible CV peut être réalisé en amont du marquage du code invisible CI de telle façon que ces deux opérations soient asynchrones l'une par rapport à l'autre. Ainsi, le marquage visible pourrait être effectué sur un premier site tandis que la lecture du code visible et l'apposition du code invisible CI correspondant pourraient être effectués sur un deuxième site de façon à conserver une confidentialité totale sur la façon de réaliser le marquage invisible. Ces opérations pourront également être réalisées à deux endroits différents d'un même site. La lecture du code visible CV et le marquage du code invisible CI sont des opérations qui sont réalisées de façon synchronisée dans un court laps de temps pour éviter toute confusion de produit.

En variante, seul un code invisible CI est apposé sur le support. Dans ce cas, le code invisible CI pourra correspondre (à l'identique ou non) au code unique généré pour chaque produit par le serveur 12.

## Revendications

1. Procédé de marquage dissimulé d'un support (11) associé à un produit, ledit support (11) à marquer étant choisi parmi: un carton, un papier décoré ou non, pelliculé ou non, vernis ou non et/ou un plastique **caractérisé en ce qu'**il comporte:
- une étape de génération d'un code unique destiné à être associé au produit, et
- une étape de marquage d'un code invisible à l'œil nu correspondant à ce code unique sur une zone prédéterminée du support (11), de sorte que
- le marquage du code invisible (CI) consiste en une attaque de matière du support (11) destinée à fragiliser certaines portions (23) de la zone prédéterminée du support (11) formant le code invisible (CI) sans affecter un aspect du support (11), l'attaque de matière consistant en une attaque optique par un laser (19.1, 19.2) ayant une longueur d'onde comprise dans le domaine des infra-rouges,
- de sorte que les portions fragilisées (23) du support (11) lors de l'étape de marquage du code invisible (CI) seront les premières portions du support (11) à être altérées pour révéler le code invisible (CI) lors d'une étape de lecture ultérieure effectuée par une seconde attaque de matière du support (11),
- ledit procédé comportant en outre l'étape de lecture effectuée par la seconde attaque de matière du support (11), la seconde attaque de matière du support (11) étant de type chimique en étant effectuée au moyen d'un solvant chimique utilisé pour réaliser un graphisme du support (11).

2. Procédé selon la revendication 1, **caractérisé en ce que** le support (11) est un emballage ou une étiquette du produit.

3. Procédé selon la revendication 1 ou 2, **caractérisé en ce que** le support (11) est un emballage primaire ou un emballage secondaire du produit.

4. Procédé selon l'une quelconque des revendications 1 à 3, **caractérisé en ce que** le code invisible (CI) est un code en une dimension ou en deux dimensions.

5. Procédé selon l'une quelconque des revendications 1 à 4, **caractérisé en ce que** le code invisible (CI) est choisi parmi: un ou plusieurs caractères alphanumériques, un code à barres, un code matriciel, un QR code, ou tout autre code numérique développé.

6. Procédé selon l'une quelconque des revendications 1 à 5, **caractérisé en ce que** le marquage invisible est effectué sur un support (11) comportant des fibres (22) de papier et/ou de plastique.

7. Procédé selon l'une quelconque des revendications 1 à 6, **caractérisé en ce que** plusieurs codes invisibles (CI) sont marqués au cours d'une même opération sur des zones définies à cet effet.

8. Procédé selon l'une quelconque des revendications 1 à 7, **caractérisé en ce qu'**il comporte en outre une étape de marquage d'un code visible (CV) auquel est associé le code invisible (CI).

9. Procédé selon la revendication 8, **caractérisé en ce que** le code invisible (CI) est déterminé à partir d'une lecture du code visible (CV).

10. Procédé selon la revendication 9, **caractérisé en ce que** la lecture du code visible (CV) et le marquage du code invisible (CI) correspondant sont synchronisés l'un par rapport à l'autre.

11. Procédé selon la revendication 10, **caractérisé en ce que** la synchronisation entre la lecture du code visible (CV) et le marquage du code invisible (CI) est effectuée par rapport à un déplacement du support (11).

12. Procédé selon l'une quelconque des revendications 1 à 11, **caractérisé en ce que** le marquage du code visible (CV) peut être réalisé en amont du marquage du code invisible (CI) de telle façon que ces deux opérations soient asynchrones l'une par rapport à l'autre.

## Patentansprüche

1. Verfahren zum Durchführen einer versteckten Markierung auf einen mit einem Produkt verbundenen Träger (11), wobei der zu markierende Träger (11) aus einem Karton, einem dekoriertem oder nicht, laminiertem oder nicht, lackiertem oder nicht Papier und/oder einem Kunststoff ausgewählt ist,
**dadurch gekennzeichnet, dass** es umfasst:
- einen Schritt des Generieren eines eindeutigen Codes, der dem Produkt zugeordnet werden soll, und
- einen Schritt des Markieren eines für das bloße Auge unsichtbaren Codes, der diesem eindeutigen Code entspricht, auf eine vorbestimmte Zone des Trägers (11),
so dass
- das Markieren des unsichtbaren Codes (CI) darin besteht, einen Angriff auf das Material des Trägers (11) durchzuführen, um bestimmte Abschnitte (23) der vorbestimmten Zone des Trägers (11), die den unsichtbaren Code (CI) bilden, zu schwächen, ohne den Träger (11) in seinem Aussehen zu beeinträchtigen, wobei der Angriff auf das Material aus einem optischen Angriff durch einen Laser (19.1, 19.2) mit einer Wellenlänge im Infrarotbereich besteht,
- so dass die geschwächten Abschnitte (23) des Trägers (11) während des Schritts des Markieren des unsichtbaren Codes (CI) die ersten Abschnitte des Trägers (11) sind, die verändert werden, um den unsichtbaren Code (CI) während eines nachfolgenden Leseschritts freizulegen, der durch einen zweiten Angriff auf das Material des Trägers (11) ausgeführt wird,
- wobei das Verfahren ferner den Leseschritt umfasst, der durch den zweiten Angriff auf das Material des Trägers (11) durchgeführt wird, wobei der zweite Angriff auf das Material des Trägers (11) chemischer Art ist, insofern er mit einem chemischen Lösungsmittel durchgeführt wird, das zum Erzeugen einer Zeichnung auf dem Träger (11) verwendet wird.

2. Verfahren nach Anspruch 1, **dadurch gekennzeichnet, dass** der Träger (11) eine Verpackung oder ein Etikett des Produkts ist.

3. Verfahren nach Anspruch 1 oder 2, **dadurch gekennzeichnet, dass** der Träger (11) eine Primärverpackung oder eine Sekundärverpackung des Produkts ist.

4. Verfahren nach einem der Ansprüche 1 bis 3, **dadurch gekennzeichnet, dass** der unsichtbare Code (CI) ein eindimensionaler oder zweidimensionaler Code ist.

5. Verfahren nach einem der Ansprüche 1 bis 4, **dadurch gekennzeichnet, dass** der unsichtbare Code (CI) aus: einem oder mehreren alphanumerischen Zeichen, einem Strichcode, einem Matrixcode, einem QR-Code oder einem anderen entwickelten digitalen Code ausgewählt wird.

6. Verfahren nach einem der Ansprüche 1 bis 5, **dadurch gekennzeichnet, dass** die unsichtbare Markierung auf einem Träger (11) mit Fasern (22) aus Papier und/oder Kunststoff durchgeführt wird.

7. Verfahren nach einem der Ansprüche 1 bis 6, **dadurch gekennzeichnet, dass** mehrere unsichtbare Codes (CI) während desselben Vorgangs auf dafür definierten Zonen markiert werden.

8. Verfahren gemäß einem der Ansprüche 1 bis 7, **dadurch gekennzeichnet, dass** es außerdem einen Schritt des Markierens eines sichtbaren Codes (CV), dem der unsichtbare Code (CI) zugeordnet ist, umfasst.

9. Verfahren nach Anspruch 8, **dadurch gekennzeichnet, dass** der unsichtbare Code (CI) aus einem Lesen des sichtbaren Codes (CV) ermittelt wird.

10. Verfahren nach Anspruch 9, **dadurch gekennzeichnet, dass** das Lesen des sichtbaren Codes (CV) und das Markieren des entsprechenden unsichtbaren Codes (CI) miteinander synchronisiert werden.

11. Verfahren nach Anspruch 10, **dadurch gekennzeichnet, dass** die Synchronisierung zwischen dem Lesen des sichtbaren Codes (CV) und dem Markieren des unsichtbaren Codes (CI) in Bezug auf eine Bewegung des Trägers (11) erfolgt.

12. Verfahren nach einem der Ansprüche 1 bis 11, **dadurch gekennzeichnet, dass** das Markieren des sichtbaren Codes (CV) vor dem Markieren des unsichtbaren Codes (CI) durchgeführt werden kann, so dass diese beiden Vorgänge asynchron zueinander sind.

## Claims

1. A method for carrying out a hidden marking on a support (11) associated with a product, said support (11) to be marked being chosen from: cardboard, paper, decorated or not, laminated or not, varnished or not and/or plastic,
**characterized in that** it comprises:
- a step of generating a unique code to be associated with the product, and
- a step of marking a code invisible to the naked eye corresponding to this unique code on a predetermined zone of the support (11),
so that
- the marking of the invisible code (CI) consists of attacking the material of the support (11) so as to weaken certain portions (23) of the predetermined zone of the support (11) forming the invisible code (CI) without affecting an aspect of the support (11), attacking the material consisting of an optical attack by a laser (19.1, 19.2) having a wavelength in the infrared range,
- so that the weakened portions (23) of the support (11) during the step of marking the invisible code (CI) will be the first portions of the support (11) to be altered in order to reveal the invisible code (CI) during a subsequent reading step carried out by a second attack of the material of the support (11),
- said method further comprising the reading step carried out by the second attack of the material of the support (11), the second attack of the material of the support (11) being of the chemical type insofar it is carried out with a chemical solvent used to produce a drawing of the support (11).

2. The method according to claim 1, **characterized in that** the support (11) is a packaging or a label of the product.

3. The method according to claim 1 or 2, **characterized in that** the support (11) is a primary packaging or a secondary packaging of the product.

4. The method according to any one of the claims 1 to 3, **characterized in that** the invisible code (CI) is a one-dimensional or two-dimensional code.

5. The method according to any one of the claims 1 to 4, **characterized in that** the invisible code (CI) is chosen from: one or more alphanumeric characters, a bar code, a matrix code, a QR code, or any other developed digital code.

6. The method according to any one of the claims 1 to 5, **characterized in that** the invisible marking is carried out on a support (11) comprising fibers (22) of paper and/or plastic.

7. The method according to any one of the claims 1 to 6, **characterized in that** several invisible codes (CI) are marked during the same operation on zones defined for this purpose.

8. The method according to any one of the claims 1 to 7, **characterized in that** it further comprises a step of marking a visible code (CV) with which the invisible code (CI) is associated.

9. The method according to claim 8, **characterized in that** the invisible code (CI) is determined from a reading of the visible code (CV).

10. The method according to claim 9, **characterized in that** the reading of the visible code (CV) and the marking of the corresponding invisible code (CI) are synchronized with each other.

11. The method according to claim 10, **characterized in that** the synchronization between the reading of the visible code (CV) and the marking of the invisible code (CI) is carried out in relation to a movement of the support (11).

12. The method according to any one of the claims 1 to 11, **characterized in that** the marking of the visible code (CV) can be carried out upstream of the marking of the invisible code (CI) so that these two operations are asynchronous with respect to each other.
